Europäisches Patentamt

European Patent Office

Office européen des brevets

(11) Veröffentlichungsnummer: **0 520 326 B1**

(12) **EUROPÄISCHE PATENTSCHRIFT**

(45) Veröffentlichungstag der Patentschrift: **20.12.95**

(51) Int. Cl.⁶: **G02B 17/06**

(21) Anmeldenummer: **92110346.1**

(22) Anmeldetag: **19.06.92**

(54) **Spiegelobjektiv**

(30) Priorität: **22.06.91 DE 4120684**

(43) Veröffentlichungstag der Anmeldung:
**30.12.92 Patentblatt 92/53**

(45) Bekanntmachung des Hinweises auf die
Patenterteilung:
**20.12.95 Patentblatt 95/51**

(84) Benannte Vertragsstaaten:
**DE FR GB IT**

(56) Entgegenhaltungen:
**US-A- 3 790 258**
**US-A- 4 030 816**
**US-A- 4 161 351**

**JOURNAL OF THE OPTICAL SOCIETY OF
AMERICA Bd. 65, Nr. 10, Oktober 1975, Seiten
1141 - 1141 RUBIN GELLES 'unobscured
aperture two mirror systems'**

(73) Patentinhaber: **Firma Carl Zeiss**

**D-73446 Oberkochen (DE)**

(84) Benannte Vertragsstaaten:
**DE FR IT**

(73) Patentinhaber: **CARL ZEISS-STIFTUNG HAN-
DELND ALS CARL ZEISS**

**D-89518 Heidenheim (Brenz) (DE)**

(84) Benannte Vertragsstaaten:
**GB**

(72) Erfinder: **Hohberg, Gerhard, Dr.
Hornbergstrasse 13
W-7080 Aalen (DE)**

Anmerkung: Innerhalb von neun Monaten nach der Bekanntmachung des Hinweises auf die Erteilung des europäischen Patents kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft ein Spiegelobjektiv mit zwei Spiegeln. Derartige Anordnungen sind mit fester Geometrie und Brennweite in verschiedenen Variationen auch mit Paraboloid- und Ellipsoidspiegeln bekannt.

Bei der Materialbearbeitung mit Lasern hängt das Bearbeitungsergebnis sehr kritisch von der Energieverteilung im Fokus ab. Das gilt in besonderem Maße für das Laserschneiden. Hierbei werden bevorzugt Laser eingesetzt, die in einem niedrigen Mode strahlen und deshalb eine annähernd beugungsbegrenzte Fokusverteilung liefern. Eine Anpassung der Fokusverteilung an die Erfordernisse, die z.B. durch Materialart und Materialdicke gegeben sind, kann in diesem Fall praktisch nur durch die wirksame Apertur und damit die Brennweite der Fokussieroptik geschehen. Deshalb werden - je nach Anwendung - verschiedene Brennweiten eingesetzt. Wenn die Anforderungen häufig wechseln, dann erwächst zur Verminderung der Umrüstzeiten der Bedarf an Fokussieroptiken mit veränderbarer Apertur.

Bei der Verwendung von Linsenoptiken sind solche Systeme seit langem im Einsatz. Dabei handelt es sich um komplette pankratische Fokussiereinheiten oder um pankratische Auf- oder Abweitungssysteme in Verbindung mit einer festen Fokussieroptik.

Beim Einsatz von Lasern hoher Leistung sind Linsensysteme nur bedingt tauglich. Deshalb werden sie zunehmend durch Spiegeloptiken ersetzt, die deutlich höher belastbar sind. Allerdings sind nur Ausführungen mit fester Apertur bekannt, beispielsweise aus US-A-4 161 351 oder US-A-4 030 816.

Aufgabe der vorliegenden Erfindung ist es, ein gattungsgemäßes Spiegelobjektiv als Pankraten zur Laserfokussierung auszubilden.

Gelöst wird diese Aufgabe durch die kennzeichnenden Merkmale des Anspruchs 1. Demnach besteht der erfindungsgemäße Pankrat aus zwei Spiegeln, einem zumindest angenäherten Paraboloid und einem zumindest angenäherten Ellipsoid. Das Laserbündel wird vom Paraboloid fokussiert. Dieser Fokus wird in den einen Brennpunkt des zumindest angenäherten Ellipsoid gelegt und von letzterem in seinen anderen Brennpunkt abgebildet.

Die Veränderung der effektiven Apertur geschieht hierbei nicht, wie bei Linsensystemen üblich, durch Veränderung des Abstands zwischen den optischen Elementen, sondern durch Veränderung des Winkels zwischen denselben.

Vorteilhafte Ausführungsformen sind Gegenstand der Unteransprüche 2 bis 7. Anspruch 8 gibt eine Laserbearbeitungsanordnung an, welche für das Spiegelobjektiv nach den Ansprüchen 1 bis 7 adaptiert ist.

In Fig. 1   ist ein Ausführungsbeispiel mit den zugehörigen Abmessungen dargestellt.

Fig. 2   zeigt einen Schnitt davon, senkrecht zur Zeichenebene durch die Achse $F_1$-S.

Fig. 3   zeigt eine Laserbearbeitungsanordnung.

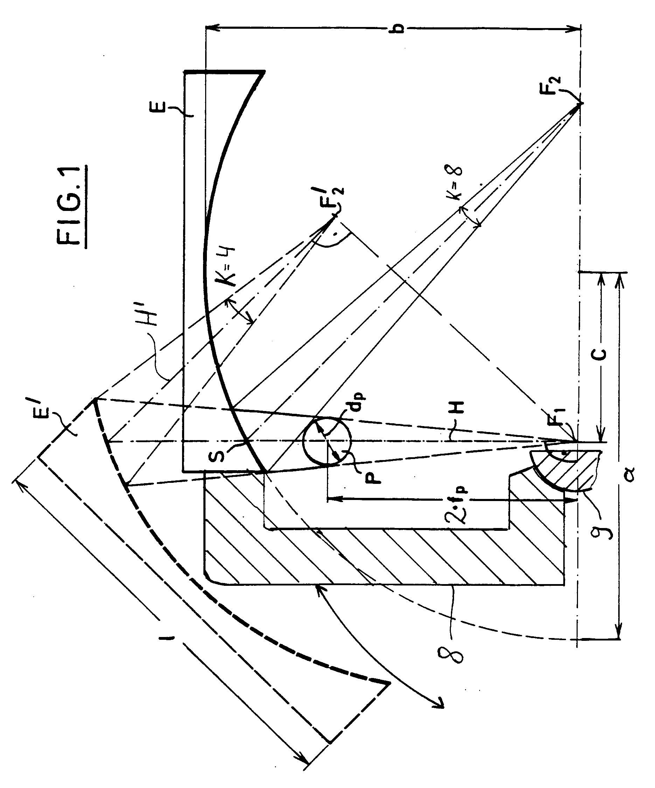

In Fig. 1 fällt ein Laserstrahl senkrecht zur Zeichenebene auf den konvexen Paraboloid-Spiegel P und wird so reflektiert, daß ein virtueller Fokus in $F_1$ entsteht. Dieser wird vom Ellipsoid E, das sich zunächst in einer Stellung mit der bildseitigen Apertur $K = 8$ befindet, nach $F_2$ abgebildet.

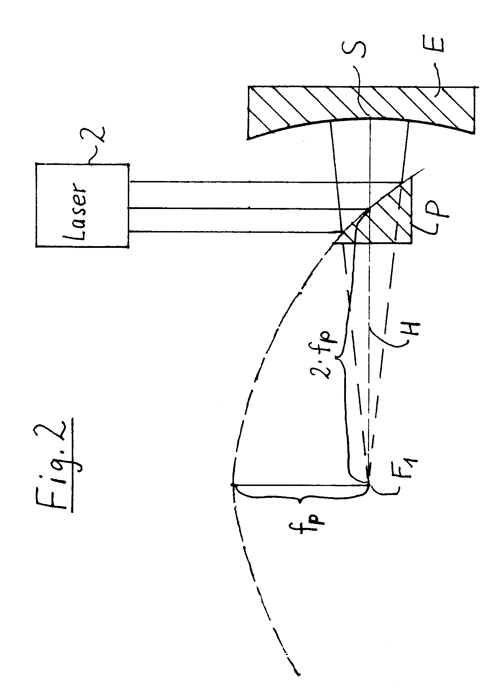

Vom Paraboloidspiegel P wird, wie Fig. 2 zeigt, ein Ausschnitt bei der Höhe, die gleich der doppelten Scheitel-Brennweite $f_p$ ist, durch den Laser (2) beleuchtet, so daß im Mittel eine Umlenkung um 90° erfolgt. In diesem zur Fig. 1 senkrechten Schnitt sind ansonsten gleiche Teile wie in Fig. 1 gleich bezeichnet.

Als Beispiel soll das Ellipsoid E derart dimensioniert sein, daß eine Variation der bildseitigen Apertur um einen Faktor zwei zwischen $k = 4$ und $k = 8$ möglich ist. Zweckmäßig wird das Ellipsoid E so gestaltet, daß die Endstellungen (E, E') symmetrisch sind. Dann muß das einfallende (von Paraboloid P erzeugte) Bündel eine Apertur von $k = 5.6$ aufweisen (geometrisches Mittel). Bei einem Durchmesser des Strahls von $d_p = 40mm$ erfordert das eine wirksame Brennweite des Paraboloids P, die bei der vorliegenden Ausführung gleich der doppelten Scheitel-Brennweite $f_p$ ist, von $2 \cdot f_p = 225mm$. Damit das reflektierte Bündel nicht abgeschattet wird, muß ein Mindestabstand zwischen den beiden Spiegeln P,E eingehalten werden. Mit den genannten Abmessungen sollte der Abstand $F_1$-S wenigstens 300mm betragen.

Die genaue Form des Ellipsoids E ist damit noch nicht festgelegt. Ein weiterer Parameter kann willkürlich gewählt werden. In Fig. 1 wurde die Zusatzforderung eingeführt, daß in den Extremstellungen ein Hauptstrahl H bzw. H' senkrecht auf der Achse des Ellipsoids E stehen soll. Mit diesen Forderungen ergibt sich ein Ellipsoid E mit den Werten $a = 362mm$, $b = 329mm$ für die Halbachsen und $c = 151mm$ für den halben Brennpunktabstand. Die für den Anwendungsfall notwendige Mindestlänge des Spiegels ergibt sich zu $1 = 366mm$.

Änderungen des willkürlichen Parameters haben nur einen geringfügigen Einfluß auf die notwendige Spiegellänge.

Die Abmessungen der Anordnung können in weitem Rahmen variiert werden.

Wird der Ellipsoidspiegel E um die zur Zeichenebene senkrechte, aber zum einfallenden Laserstrahl parallele Achse durch den ersten Fokus

$F_1$ gedreht, indem der Halter (8) sich um das Lager (9) dreht, dann wandert der zweite Ellipsenfokus $F_2$ und gleichzeitig ändert sich die Apertur des dort fokussierten Bündels und damit die Brennweite des Gesamtsystems. Eingezeichnet ist gestrichelt die Stellung des Ellipsoidspiegels E' mit Apertur $k = 4$ und Fokus $F_2'$.

Während bei Foto-Varioobjektiven bei veränderter Brennweite stets die Abbildung auf die Filmebene erfolgen muß, ist es bei dem erfindungsgemäßen Spiegelobjektiv bei der Anwendung zur Laserbearbeitung kein Problem, daß der Fokus $F_2$, $F_2'$ auf einem Kreisbogen wandert.

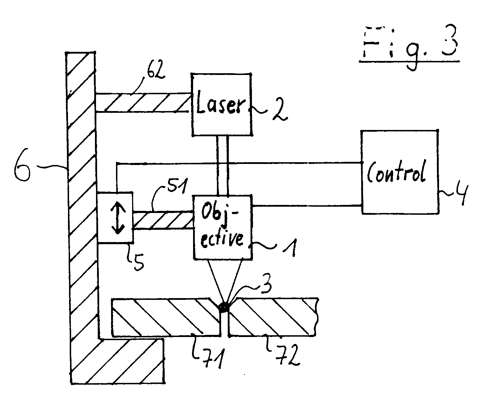

Eine Laserbearbeitungsanordnung hat häufig wie in Fig. 3 eine Bahnsteuerung (4) für die Bewegung eines Laserkopfes (1, 2) mit darin enthaltenem Objektiv (1) relativ zum Werkstück (41, 42) und ohne weiteres kann für die Verwendung eines erfindungsgemäßen Pankrates (1) die Steuerung (4) so programmiert werden, daß die von der gewünschten Brennweite bzw. Apertur abhängige Lage des Bearbeitungspunktes (3), also des Fokus $F_2$, $F_2'$, relativ zum Laserkopf (1, 2) berücksichtigt wird.

Die Strahlrichtung des austretenden Strahls wird bei der Variation der effektiven Brennweite nur unerheblich geändert, so daß eine Korrektur derselben meist unnötig ist. Die Verwendung eines Ellipsoids für die endliche Abbildung ergibt eine fehlerfreie Strahlvereinigung.

In manchen Fällen werden geringe Abbildungsfehler in Kauf genommen, wenn dadurch Spiegel verwendet werden können, die einfacher herstellbar sind.

Im Falle der Abbildung 1 kann das Ellipsoid z.B. näherungsweise durch eine torische Fläche ersetzt werden, deren Hauptkrümmungsradius in der Zeichenebene

$$R_1 = a^2/b = 362^2/329 = 398 \text{ mm}$$

beträgt, und senkrecht dazu

$$R_2 = b = 329 \text{ mm.}$$

Eine noch gröbere Näherung wird mit einer sphärischen Fläche erreicht. Dabei sind jedoch die Abbildungsfehler, vorwiegend der Astigmatismus, beträchtlich.

Auch das in Abbildung 1 dargestellte Paraboloid kann, wenn eine Verschlechterung der Fokusqualität zulässig ist, durch eine einfacher herstellbare Fläche ersetzt werden.

Eine sphärische Fläche würde bei Verwendung in der skizzierten Anordnung, d.h. mit 90° Strahlumlenkung, sehr erhebliche Bildfehler verursachen. Deshalb würde man eine Sphäre unter einem möglichst kleinen Umlenkwinkel verwenden. Der Anteil des Astigmatismus kann durch Einsatz einer torischen Fläche weitgehend eliminiert werden.

Es ist auch denkbar, die astigmatischen Fehleranteile der beiden Spiegel so zu bemessen, daß sie sich in Summe kompensieren. Dies erscheint jedoch nur in seltenen Fällen sinnvoll, da meistens moderne Fertigungsmaschinen zur Verfügung stehen, mit denen auch die elliptischen und parabolischen Flächen problemlos und zu angemessenen Kosten hergestellt werden können.

## Patentansprüche

1. Spiegelobjektiv mit einem ersten Spiegel (P) mit einem ersten Fokus ($F_1$) und zumindest angenähert Paraboloidform und mit einem zweiten Spiegel (E) mit zumindest angenähert Ellipsoidform, dadurch gekennzeichnet, daß der zweite Spiegel um eine Achse durch den ersten Fokus ($F_1$) derart drehbar ist, daß dadurch die effektive Apertur des Systems aus erstem (P) und zweitem (E) Spiegel variierbar ist. und den ersten Fokus ($F_1$) in einen zweiten Fokus ($F_2$) abbildet.

2. Spiegelobjektiv nach Anspruch 1, dadurch gekennzeichnet, daß eine Variation der bildseitigen Apertur etwa von $k = 4$ bis $k = 8$ möglich ist.

3. Spiegelobjektiv nach Anspruch 1 oder Anspruch 2, dadurch gekennzeichnet, daß der Ellipsoidspiegel (E) um eine zum einfallenden Laserbündel parallele Achse gedreht wird.

4. Spiegelobjektiv nach mindestens einem der Ansprüche 1 bis 3, dadurch gekennzeichnet, daß der erste Spiegel (P) konvex ist.

5. Spiegelobjektiv nach mindestens einem der Ansprüche 1 bis 4, dadurch gekennzeichnet, daß der erste Spiegel (P) ein genaues Paraboloid und/oder der zweite Spiegel (E) ein genaues Ellipsoid ist.

6. Spiegelobjektiv nach mindestens einem der Ansprüche 1 bis 4, dadurch gekennzeichnet, daß die Paraboloidform des ersten Spiegels (P) durch eine torische Fläche angenähert ist und/oder die Ellipsoidform des zweiten Spiegels (E) durch eine torische Fläche angenähert ist.

7. Laserbearbeitungsanordnung mit einem Laserkopf (1, 2) und einer Bahnsteuerung (3), dadurch gekennzeichnet, daß der Laserkopf (1, 2) ein Spiegelobjektiv (1) nach mindestens einem der Ansprüche 1 bis 6 enthält und die Bahnsteuerung (3) abhängig von der eingestellten Brennweite des Spiegelobjektivs (1) die Lage des Bearbeitungspunkts (3) relativ zum Laserkopf (1, 2) verändert, so daß dieser mit dem Fokus ($F_2$, $F_2$') des Spiegelobjektivs (1) zusammenfällt.

## Claims

1. A mirror objective with a first mirror (P) having a first focus ($F_1$) and an at least approximately paraboloid form, and with a second mirror (E) having an at least approximately ellipsoidal form, characterized in that the second mirror (E) is pivotable around an axis passing the first focus ($F_1$) in such a manner, that thereby the effective aperture of the system composed of the first (P) and second (E) mirror is variable, and that the system images the first focus ($F_1$) onto the second focus ($F_2$).

2. A mirror objective according to claim 1, characterized in that a variation of the image-side aperture is possible from about K = 4 to about K = 8.

3. A mirror objective according to claim 1 or claim 2, characterized in that the ellipsoidal mirror (E) is rotated about an axis which is parallel to the incoming laser bundle.

4. A mirror objective according to at least one of the claims 1 to 3, characterized in that the first mirror (P) is convex.

5. A mirror objective according to at least one of claims 1 to 4, characterized in that the first mirror (P) is an exact paraboloid and/or the second mirror (E) is an exact ellipsoid.

6. A mirror objective according to at least one of claims 1 to 4, characterized in that the paraboloidal form of the first mirror (P) is approximated by a torical surface and/or the ellipsoidal form of the second mirror (E) is approximated by a torical surface.

7. A laser machining apparatus comprising a laser head (1, 2) and a track control system (3), characterized in that the laser head (1, 2) contains a mirror objective (1) according to at least one of claims 1 to 6 and that the track control system (3) changes the position of the machining point (3) in relation to the laser head (1, 2) depending on the predetermined focal length of the mirror objective (1) in such a manner, that this point (3) coincides with the focus ($F_2$, $F_2$') of the mirror objective (1).

## Revendications

1. Objectif à miroirs comprenant un premier miroir (P) ayant un premier foyer ($F_1$) et présentant au moins approximativement une forme de paraboloïde, ainsi qu'un second miroir (E) ayant au moins approximativement une forme d'ellipsoïde, caractérisé en ce que le second miroir peut être tourné autour d'un axe passant par le premier foyer ($F_1$) de façon que l'ouverture effective du système formé par le premier miroir (P) et le second miroir (E) soit variable et que le premier foyer ($F_1$) donne une image au second foyer ($F_2$).

2. Objectif à miroirs selon la revendication 1, caractérisé en ce qu'il est possible de modifier l'ouverture du côté de l'image sensiblement de K = 4 jusqu'à K = 8.

3. Objectif à miroirs selon la revendication 1 ou la revendication 2, caractérisé en ce que le miroir ellipsoïdal (E) est tourné autour d'un axe parallèle au faisceau laser incident.

4. Objectif à miroirs selon au moins l'une des revendications 1 à 3, caractérisé en ce que le premier miroir (P) est convexe.

5. Objectif à miroirs selon au moins l'une des revendications 1 à 4, caractérisé en ce que le premier miroir (P) est un paraboloïde exact et/ou le second miroir (E) est un ellipsoïde exact.

6. Objectif à miroirs selon au moins l'une des revendications 1 à 4, caractérisé en ce que la forme de paraboloïde du premier miroir (P) est obtenue par approximation en utilisant une surface torique et/ou en ce que la forme d'ellipsoïde du second miroir (E) est obtenue par approximation par une surface torique.

7. Dispositif d'usinage à laser comprenant une tête laser (1, 2) et une commande de trajectoire (4), caractérisé en ce que la tête laser (1, 2) comporte un objectif à miroirs (1) selon au moins l'une des revendications 1 à 6 et en fonction de la distance focale réglée de l'objectif à miroirs (1), la commande de trajectoire (4) modifie la position du point d'usinage (3) par rapport à la tête laser (1, 2) pour que celle-ci coïncide avec le foyer ($F_2$, $F_2$') de l'objectif à miroirs (1).

FIG.1

Fig.2

Fig. 3